# EUROPEAN PATENT APPLICATION

(11) **EP 0 592 684 A1**
(43) Date of publication of application: **20.04.1994**
(21) Application number: 93906884.7
(22) Date of filing: 05.04.1993
(51) Int. Cl.: H01M 10/40, H01M 4/02

(54) **CELL**

(30) Priority: 06.04.1992 JP 114114/92; 19.08.1992 JP 244167/92
(71) Applicant: YUASA CORPORATION, Takatsuki-shi, Osaka 569 (JP)
(72) Inventor: TAKEDA, Kazunari, Takatsuki-shi, Osaka 569 (JP); NAKAJIMA, Yasumasa, Takatsuki-shi, Osaka 569 (JP); KATO, Shiro, Takatsuki-shi, Osaka 569 (JP)
(74) Representative: Linn, Samuel Jonathan
(86) International application number: JP9300434
(87) International publication number: WO9320594

(57) **Abstract**

The positive electrode, electrolyte, and negative electrode of a cell are improved in order to obtain a high-performance cell with a long-term reliability and excellent charge and discharge cycle characteristics, particularly after a long-term storage. Electrolytic layers are formed directly on the surfaces of the positive and negative electrodes. At least one of the positive and negative electrodes contains a binding agent. The electrolytic layer is made of an ion conductive high molecular compound containing one or more kinds of ionic compounds as a solution.

## Description

### Technical Field

This invention relates to an improvement in a cathode, an electrolyte and an anode in a battery operating reversibly under an environmental temperature.

### Background Art

With a recent tendency to design various electric equipments into microelectronics forms, a battery has been housed in an electronics element and integrated with the electronics element and its circuit, as represented by power sources for memory back-up of various electric equipments. For this reason, a demand for minimizing a size, a weight and a thickness of battery and a request for battery having a large energy density have been increasing. In a field of primary battery, a small-sized and light-weight battery such as a lithium battery has already been put to practical use, however, its application field is limited to a small region. Under these circumstances, in a field of secondary battery, a battery utilizing nonaqueous electrolyte, which can be made smaller in size and weight, attracts public attention at present as an alternate battery in place of a conventional lead-battery and a nickel-cadmium battery. However, in the secondary battery utilizing the nonaqueous electrolyte, an electrode active material which can satisfy practical physical properties such as a cycle characteristic and a self-discharge characteristic, has not been found yet. Therefore, investigations are carried on still now in many research organizations.

Here, in order to obtain a small-sized and light-weight battery having a large energy density and a high reliability, it is necessary to examine the following problems (1) and (2).
(1)Problem of electrode active material and electrode
(2)Problem of electrolyte

As for the problem (1), the inventor examined a film type battery, that is, a battery having unit cells with thicknesses of 100 to 500 microns and called also as "sheet-shaped" battery. In this kind of battery, however, such problems arose that a manufacture of lithium foil having a desirable performance was somewhat difficult from a technical point of view and that a manufacturing process of battery became complicated. Further, in the secondary battery, such a problem arose that a formation of lithium dendrite and a passivation of interface took place so that use of metallic lithium was restricted. Therefore, investigations on alloys including metallic lithium as represented by lithium-aluminum, lithium-lead and lithium-tin, are being carried on actively. However, the electrode was cracked or broken into fine pieces due to repeated charging and discharging so that the cycle characteristic was not improved even when these alloys were used, because these alloys have small strengths as represented by the lithium-aluminum alloy. As an alternate method for restricting the formation of lithium dendrite, investigations on selection of electrolyte salt and improvement in separator are being tried. As for the separator among them, it is attempted now to restrict the formation of lithium dendrite by laminating non-woven fabrics made of polypropylene and non-woven fabrics made of glass fiber, which have so far been used. However, a substantial solution has not been found yet.

Accordingly, electrode active materials utilizing intercalation or doping phenomenon of layer compound are specially studied now in many research organizations. These materials are expected for their extremely excellent charge/discharge cycle characteristics, because a theoretically complicated chemical reaction does not occur at time of electrochemical reaction in the charging and discharging. Use of carbon material as the electrode active material is a method turned up, during the studies as mentioned above, as a solution for problems of cycle characteristic and self-discharge characteristic of the electrode active material. Features of this carbon material are a high doping capacity, a low self-discharge rate and an excellent cycle characteristic. A feature to be specially mentioned is that it has a base-potential extremely near to that of metallic lithium.

On the other hand, the problem (2) is as described below. A liquid electrolyte, especially prepared by dissolving ionic compound in an organic electrolyte, has so far been used for an electrolyte for a battery utilizing electrochemical reaction and electrochemical devices other than the battery, such as electric double-layer capacitor and electrochromic element etc. However, since it has been easy occur a leakage of electrolyte, and elusion or evaporation etc. of electrode material to battery outside when the liquid electrolyte has been used, problems of long-term reliability and flying-around of electrolyte in a sealing process have remained unsolved. As a means to solve these problems, that is, a means to improve a solution-leakage resistance and a long-term reliability, an ion-conductive high-molecular compound having a large ionic conductivity has been reported and further studied.

Ion-conductive high-molecular compounds being studied now are straight-chain polymer, network crosslink polymer or comb-shaped crosslink polymer, of homopolymer or copolymer having ethylene oxide as its basic unit. It is proposed and practiced that crystallization is avoided by making the compound into forms of network crosslink polymer or comb-shaped crosslink polymer for the purpose of increasing the ionic conductivity at a low temperature. Especially, the ion-conductive high-molecular compound using the network crosslink polymer has a large mechanical strength and is excellent in the ionic conductivity at a low temperature, so that it is useful.

While, in the electrode active material utilizing intercalation or doping phenomenon of the layer compound, expansion and contraction of the electrode active material are produced accompanied by charging and discharging. To cope with this problem, it is required to improve mechanical strengths of the electrode and the electrolyte.

When the ion-conductive high-molecular compound is used as the electrolyte for electrochemical devices, it becomes necessary to make the electrolyte into a film shape in order to reduce an internal resistance. Especially, this is important for the film type battery. In case of the ion-conductive high-molecular compound, it is possible to work its uniform film easily into a voluntary shape, and various methods for this purpose are known. There are several methods, for example, such as a method in which a solution of the ion-conductive high-molecular compound is cast and its solvent is evaporated and removed, a method in which polymeric monomer or macromer is applied on a substrate to be heated and polymerized, or a method in which curing is done by means of irradiation of activated ray.

The heating and polymerizing method has so far been used because of its conveniency. However, the heating and polymerizing method has included the following problems. (1) It is hard to improve a manufacturing speed because a heating and polymerizing time becomes very long. (2) It is hard to carry out uniform polymerization because a temperature gradient is apt to be produced in a heating furnace. (3) The heating furnace and its auxiliary facility become large because heating must be done in an atmosphere of inert gas.

The inventors have tried to make up a film type battery (or sheet-shaped battery) by putting only one sheet-shaped electrolyte layer in between a cathode and an anode. In this method, however, it is hard to make better a contact between interfaces of the electrode and the electrolyte layer so that a contact surface resistance becomes large in an ordinary case. For this reason, all prepared batteries were poor in battery characteristics, especially in cycle characteristic and charge/discharge characteristic after long term preservation.

Therefore, it was tried to coat composition liquid of ion-conductive high-molecular compound on an anode surface or a cathode surface and harden it by means of polymerization by heating or polymerization by irradiation of ultraviolet ray. According to these methods, it was possible to make better the surface contact between the electrode and the electrolyte layer as compared with the method in which only one sheet-shaped electrolyte layer was put in between the both electrodes. In these methods, however, it was hard to completely harden up to the composition liquid penetrating into electrode inside when coated, and even the battery made by irradiation of ultraviolet ray had an insufficient charge/discharge characteristic after long term preservation. In case of the polymerization by heating, there was such problem as a long polymerizing time and a more irregular cross-link network structure due to displacement of polymerization initiator in the composition liquid of the ion-conductive high molecular-compound. This problem became a large problem together with the problems of the above-mentioned manufacturing speed and facility.

This invention is made in consideration of the above present circumstances, and an object of it is to provide a battery excellent in charge/discharge cycle characteristic, especially charge/discharge cycle characteristic after long-term preservation, and long-term reliability and with high performance.

### Disclosure of the Invention

The battery of this invention is characterized in that electrolyte layers formed on surfaces of a cathode and an anode respectively are made contact at layer surfaces, at least one of the cathode and the anode include a binder, and the electrolyte layers are composed of an ion-conductive high-molecular compound including one or more kinds of ionic compound in a solution state.

Since the electrolyte layers are formed on the surfaces of cathode and the anode respectively in the present invention, contact surface resistances between the electrodes and the electrolyte layers become small. Therefore, deposition of lithium is distributed uniformly when metallic lithium is used for the anode, so that an internal short-circuiting due to partially concentrated deposition of lithium can be prevented. Further, since the electrolyte layers have the double-layer structure, an internal short-circuiting caused by a pin hole etc. can also be prevented. Moreover, since the electrolyte layers are made contact each other, the contact surface resistances become very small so that an internal resistance of battery becomes small and a charge/discharge cycle characteristic can be improved. In addition, since at least one of the cathode and the anode includes the binder, a mechanical strength of electrode can be improved. Thereby, it becomes possible to preferably cope with expansion and contraction of electrode accompanied by charging and discharging and the charge/discharge cycle characteristic can be improved from this point, too. Furthermore, since the electrolyte layers are composed of the ion-conductive high-molecular compound, formation of dendrite is restricted when using lithium for the anode so that a liquid-leakage resistance and a long-term reliability are improved. Since the mechanical strength of electrolyte layer is also improved, short-circuiting at time of manufacture of the battery and repeated charging and discharging can be prevented.

It is preferable to form the ion-conductive high-molecular compound by means of polymerization reaction created by irradiation of ionizing radiation. This method will offer further smaller contact surface resistances between the electrodes and the electrolyte layers.

As the ionizing radiation; γ-ray, X-ray, electron beam and neutron beam etc. may be mentioned. The method using these ionizing radiations works very efficiently when the above-mentioned ion-conductive high-molecular compound is cross-linked. Namely, a degree of cross-linking of the ion-conductive high-molecular compound can be controlled easily by controlling an amount of irradiation and various electrodes and electrolytes, which are optimum from electro-chemical standpoint, can be made up. In addition, the ionizing radiation is excellent in an energy efficiency, too.

As the foregoing ion-conductive high-molecular compound; a compound may be mentioned which is prepared by polymerizing a high-molecular compound having reactive double bond and polyether structure so as to have a crosslink network structure. Since such the ion-conductive high-molecular compound is a crosslink polymer formed by ether bond, it does not include intermolecular hydrogen bond so that its structure has a low glass transition temperature. For this reason, migration of dissolved ionic compound becomes extremely easy in such the ion-conductive high-molecular compound.

As the ionic compound; inorganic ionic salts including one kind of Li, Na or K such as LiClO₄, LiBF₄, LiAsF₆, LiPF₆, LiI, LiBr, Li₂B₁₀Cl₁₀, LiCF₃SO₃, LiCF₃CO₂, LiSCN, NaI, NaSCN, NaBr, NaClO₄, KClO₄ and KSCN etc.; quaternary ammonium salts such as (CH₃)₄NBF₄, (CH₃)₄NBr, (C₂H₅)₄NClO₄, (C₂H₅)₄NI, (C₃H₇)₄NBr, (n-C₄H₉)₄NClO₄, (n-C₄H₉)₄NI, (C₂H₅)₄N-maleate, (C₂H₅)₄N-benzoate and (C₂H₅)₄N-phthalate etc.; and organic ionic salts such as lithium stearylsulfonate, sodium octylsulfonate, and lithium dodecylbenzenesulfonate etc.; for example, may be mentioned. These ionic compounds may be used by being combined two or more kinds.

Concerning a compounding ratio of these ionic compounds, a ratio of the ionic compound to the ether bond oxygen of the foregoing high-molecular compound is 0.0001 to 5.0 moles, especially a ratio of 0.005 to 2.0 moles is preferable. When a quantity of ionic compound is excessively large, the excessive ionic compound i.e. inorganic ionic salt for example, does not dissociate but is only present as a mixture, so as to result in a decrease of the ionic conductivity. Further, a proper mixing ratio of the ionic compound differs depending on the electrode active material. For example, a ratio around a value offering the maximum ion conductivity of electrolyte is preferable for the battery utilizing the intercalation of layer compound, and a ratio must be set so as to correspond to a change of ion density in the electrolyte caused by charging and discharging for the battery using electro-conductive polymer utilizing the doping phenomenon as the electrode active material.

There is no special limitation in an inclusion method of the ionic compound. A method may be mentioned, for example, in which the ionic compound is dissolved in organic solvent such as methylethylketone or tetrahydrofran etc. and mixed uniformly to the high-molecular compound, and the organic solvent is then removed under vacuum reduced pressure.

An organic compound which can dissolve the ionic compound may be included in the ion-conductive high-molecular compound. By doing so, the ionic conductivity can be improved markedly without changing the basic skeleton of ion-conductive high-molecular compound.

As the organic compound which can dissolve the ionic compound; cyclic carbonic esters such as propylene carbonate and ethylene carbonate etc.; cyclic esters such as γ-butyrolactone; ethers such as tetrahydrofuran or its derivative, 1,3-dioxane, 1,2-dimethoxyethane and methyldigraim etc.; nitriles such as acetonitrile and benzonitrile etc.; dioxorane or its derivative; and sulfolane or its derivative etc.; for example, may be mentioned. These compounds may be used independently or by being combined two or more kinds. The kind of material is not limited to them. Compounding ratio and compounding method are at will.

A binder is prepared by dissolving or dispersing an organic compound, which will be described later, in a solvent such as dimethylformamide or xylene etc., for example. As the organic compound, polymer or copolymer of the following compounds may be mentioned. As the compounds; acrylonitrile, methacrylonitrile, vinylidene fluoride, vinyl fluoride, chloroprene, vinyl piridine and their derivatives, vinylidene chloride, ethylene, propylene, cyclic diene etc., may be mentioned. As the cyclic diene; cyclopentadiene, 1,3-cyclohexadiene etc., for example, may be mentioned.

As methods for including the binder into the electrode; a method in which the foregoing organic compound is dissolved in solvent, the active material and ion-conductive high-molecular compound etc. are dispersed in it, and the prepared solution is used as an application liquid; and a method in which the active material and ion-conductive high-molecular compound etc. are dispersed in a dispersant liquid comprising the foregoing organic compound and a dispersant for dispersing the organic compound, and the prepared solution is used as an application liquid etc., are generally used.

Carbon material may be used as the negative active material. The carbon material has a high doping capacity, a low self-discharge rate, an excellent cycle characteristic, and a base-potential extremely near to that of metallic lithium. It does not produce a complicated chemical reaction theoretically at time of the electrochemical reaction during charging and discharging. Consequently, an extremely excellent charge/discharge cycle characteristic can be obtained when the carbon material is used as the negative active material. In addition, the anode becomes extremely stable from physical and electrochemical points of view.

As the negative active material; alloys including lithium metal such as lithium-aluminum, lithium-lead, lithium-tin, lithium-aluminum-tin, lithium-gallium and Wood's alloys etc.; lithium metals and carbon materials etc., may be mentioned. These materials may be used by being combined two or more kinds.

As the carbon material; it is preferable to use materials having analyzed results by X-ray diffraction as listed in Table 1, carbon powder prepared by burning anisotropic pitch at a temperature of higher than 2,000°C (average grain size: under 15 microns inclusive), and carbon fiber etc., for example.

**Table 1**

| | |
|---|---|
| Spacing of lattice planes (d002) | 3.35∼3.40Å |
| Size of crystallite in a-axis direction | La: 200Å or more |
| Size of crystallite in c-axis direction | Lc: 200Å or more |
| True density | 2.00∼2.25g/cm³ |

As the positive active material, the following materials may be mentioned. There are I-group metallic compounds such as CuO, Cu₂O, Ag₂O, CuS and CuSO₄ etc.; IV-group metallic compounds such as TiS₂, SiO₂ and SnO etc., V-group metallic compounds such as V₂O₅, V₆O₁₂, VOₓ, Nb₂O₅, Bi₂O₃ and Sb₂O₃ etc.; VI-group metallic compounds such as CrO₃, Cr₂O₃, MoS₂, WO₃ and SeO₂ etc.; VII-group metallic compounds such as MnO₂ and Mn₂O₃ etc.; VIII-group metallic compounds such as Fe₂O₃, FeO, Fe₃O₄, Ni₂O₃, NiO, CoS₂ and CoO etc.; metallic compounds such as lithium-cobalt composite oxide and lithium-manganese composite oxide etc., for example, expressed by general formulas of LiₓMX₂ and LiₓMN_{y}X₂ (M and N are I- through VIII-group metals and X is chalcogens compound such as oxygen and sulfur etc.); electro-conductive high-molecular compounds such as polypyrrole, polyaniline, polyparaphenylene, polyacetylene and polyacene group materials; and pseudo-graphite structural carbon material etc. However, the kind of positive active material is not limited to them.

Concerning an application method of the ion-conductive high-molecular compound on surfaces of the electrode; it is preferable to apply the compound into an uniform thickness by means of, for example, a roller coating using an applicator roll, a doctor blade method, a spin coating and bar coder etc. However, the kind of application method is not limited to them. By using these means, it become possible to apply the ion-conductive high-molecular compound on the surfaces of the electrode in a voluntary thickness and a voluntary shape.

Concerning an application method of the cathode and the anode on the positive current collector plate and the negative current collector plate respectively, it is preferable to apply the electrode into an uniform thickness by means of, for example, a roller coating using an applicator roll, a doctor blade method, a spin coating and bar coder etc. However, the kind of application method is not limited to them. By using these means, it becomes possible to increase practical surface areas of the active material in contact with the electrolytes and current collector plates in the cathode and the anode, and it become possible to apply the cathode and the anode on the positive current collector plate and the negative current collector plate in a voluntary thickness and a voluntary shape. In these cases, carbon such as graphite, carbon black and acetylene black etc. (This carbon has properties quite different from those of the carbon used for the negative active material.) and electro-conductive material such as metallic powder and electro-conductive metal oxide etc. are mixed in the cathode and the anode as occasion demands, so that an electron conductivity may be improved. Further, in order to obtain an uniform mixed and dispersed system when manufacturing the cathode and the anode, several kinds of dispersants and dispersion mediums may be added. In addition, a thickener, an extender and a tackifier may be added.

It is preferable to use aluminum, stainless steel, titanium and copper etc. for the positive current collector plate and to use stainless steel, iron, nickel and copper etc. for the negative current collector plate. However, the kind of material is not limited to them.

### Brief Description of the Drawings

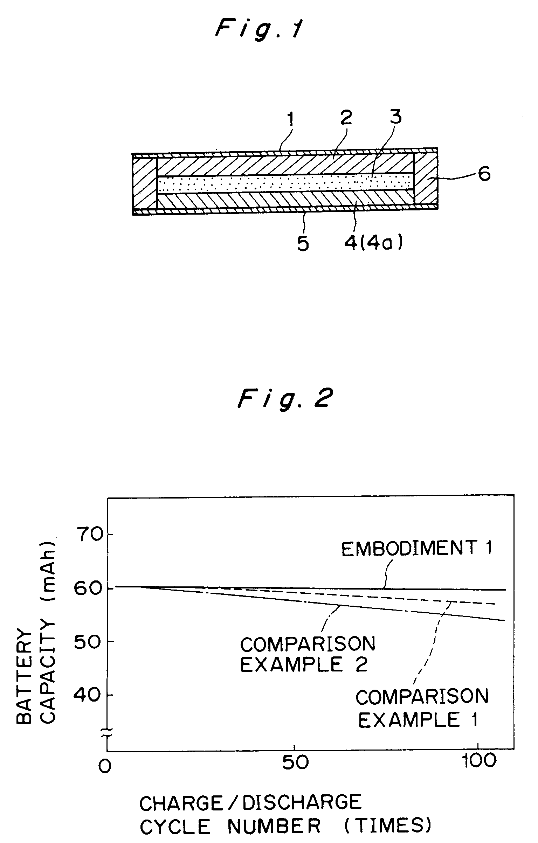

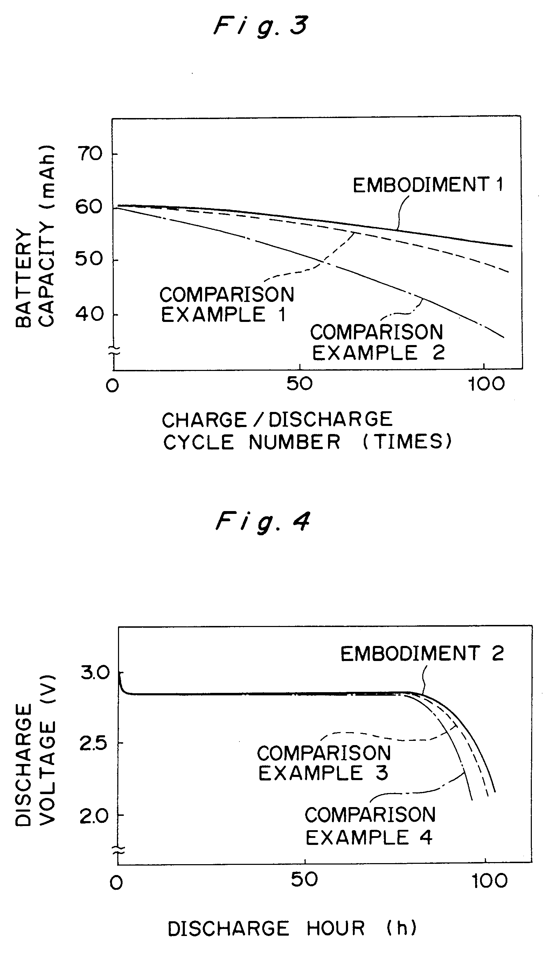

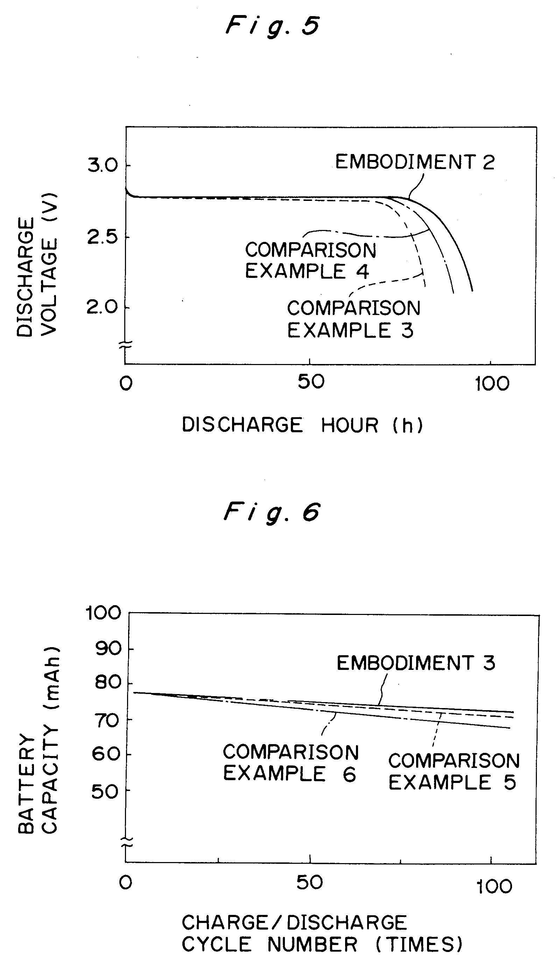

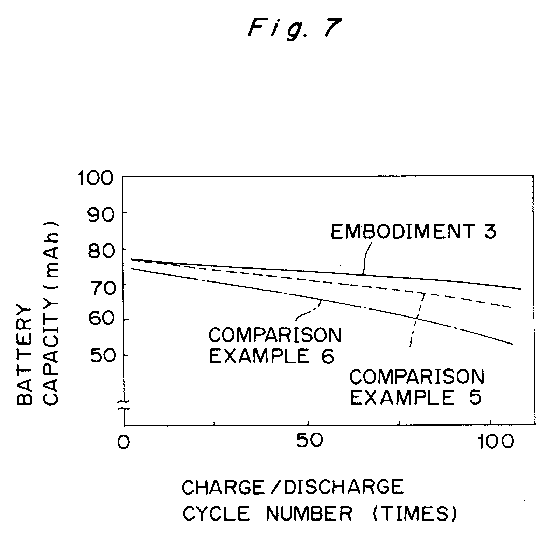

Fig. 1 is a vertical sectional view showing a film type battery which is an example of battery of this invention. Fig. 2 is a diagram showing initial charge/discharge cycle characteristics for film type batteries of embodiment 1 and comparison examples 1 and 2. Fig. 3 is a diagram showing charge/discharge cycle characteristics after long-term preservation for film type batteries of embodiment 1 and comparison examples 1 and 2. Fig. 4 is a diagram showing initial discharge characteristics for film type batteries of embodiment 2 and comparison examples 3 and 4. Fig. 5 is a diagram showing discharge characteristics after long-term preservation for film type batteries of embodiment 2 and comparison examples 3 and 4. Fig. 6 is a diagram showing initial charge/discharge cycle characteristics for film type batteries of embodiment 3 and comparison examples 5 and 6. Fig. 7 is a diagram showing charge/discharge cycle characteristics after long-term preservation for film type batteries of embodiment 3 and comparison examples 5 and 6.

### Best Mode for Carrying Out the Invention

### (Embodiment 1)

Fig. 1 is a vertical sectional view showing a film type battery which is an example of battery of this invention. In this figure, 1 is a positive current collector plate comprising aluminum, 2 is a cathode composite, 3 is an electrolyte layer, 4 is an anode composite, 5 is a negative current collector plate comprising stainless steel and 6 is a sealing material comprising denatured polypropylene. The both current collector plates 1 and 5 serve also as outer packages.

In the film type battery of this embodiment, the electrolyte layer 3 has a double-layer structure comprising electrolyte layers formed on the cathode composite 2 and the anode composite 4 respectively and is formed by means of irradiation of electron beam, and both the cathode composite 2 and the anode composite 4 include the binder.

The film type battery of this embodiment was made up through the following processes (a) to (e).
(a); The cathode composite 2 was formed in the following manner. LiCoO₂ forming the positive active material was mixed to acetylene black forming the conductive material with a weight ratio of 85 to 15 (mixture A₁). This mixture A₁ was mixed to dimethylformamide solution (2 wt%) of polyacrylonitrile forming the binder with a weight ratio of 2.4 to 2 under an atmosphere of dried inert gas (mixture B₁). The mixture B₁ was cast by means of screen coating on the positive current collector plate 1 on a surface of which a conductive carbon film was formed, and dried under an atmosphere of dried inert gas. A film thickness of the cathode composite 2 formed on the positive current collector plate 1 was 60 microns.
(b); The electrolyte layer 3 was formed on the cathode composite 2 in the following manner. Polyethylene glycol diacrylate (molecular weight: 5000) was mixed to polyethylene glycol monoacrylate (molecular weight: 400) with a weight ratio of 6 to 4 to form a high-molecular mixture (mixture C₁). 30 weight parts of the mixture C₁ were mixed with 6 weight parts of LiBF₄, 32 weight parts of 1,2-dimethoxyethane and 32 weight parts of γ-butylolactone (mixture D₁). The mixture D₁ was cast by means of screen coating on the cathode composite 2 under an atmosphere of dried inert gas and irradiated with electron beam having an electron beam intensity of 8 Mrad under an atmosphere of dried inert gas so as to be cured. A thickness of the electrolyte layer 3 formed on the cathode composite 2 was 25 microns.
(c); The anode composite 4 was formed in the following manner. Carbon powder forming the negative active material was mixed to toluene solution (2 wt%) of copolymer of ethylene-propylene-cyclopentadiene forming the binder with a weight ratio of 2 to 5 under the atmosphere of dried inert gas (mixture E₁). This mixture E₁ was cast by means of screen coating on the negative current collector plate 5, and dried under the atmosphere of dried inert gas. A thickness of the anode composite 4 formed on the negative current collector plate 5 was 30 microns.
(d); The electrolyte layer 3 was formed on the anode composite 4 in the following manner. The mixture D₁ same with that of the process (b) was prepared. This mixture D₁ was cast by means of screen coating on the anode composite 4 under the atmosphere of dried inert gas, and irradiated with electron beam having an electron beam intensity of 8 Mrad under the atmosphere of dried inert gas so as to be cured. A thickness of the electrolyte layer 3 formed on the anode composite 4 was 25 microns.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were made contact each other at the respective electrolyte layers 3.

In the processes (b) and (d), the mixture C₁ is polymerized by means of the irradiation of electron beam to form the ion-conductive high-molecular compound having the crosslink network structure. LiBF₄ forming the ionic compound is included in the prepared ion-conductive high-molecular compound under a state of being preferably dissolved by 1,2-dimethoxyethane and γ-butylolactone.

### (Comparison example 1)

A film type battery of this comparison example is different from that of the embodiment 1 in a point that both the cathode composite 2 and the anode composite 4 do not include the binder.

The film type battery of this comparison example was made up through the following processes (a) to (e).
(a); The cathode composite 2 was formed in the following manner. The mixture C₁ same with that of the embodiment 1 was prepared. 10 weight parts of the mixture C₁ were mixed with 1 weight part of LiBF₄, 10 weight parts of 1,2-dimethoxyethane and 10 weight parts of γ-butylolactone (mixture F₁₁). While, the mixture A₁ same with that of the embodiment 1 was prepared. This mixture A₁ was mixed to the mixture F₁₁ with a weight ratio of 10 to 3 under the atmosphere of dried inert gas (mixture G₁₁). The mixture G₁₁ was cast by means of screen coating on the positive current collector plate 1 on a surface of which the conductive carbon film was formed. Thereafter, the mixture was irradiated with electron beam having an electron beam intensity of 12 Mrad under the atmosphere of dried inert gas so as to be cured. A film thickness of the cathode composite 2 formed on the positive current collector plate 1 was 60 microns.
(b); The electrolyte layer 3 was formed on the cathode composite 2 in the same way as that of process (b) of the embodiment 1. A thickness of the electrolyte layer 3 formed on the cathode composite 2 was 25 microns.
(c); The anode composite 4 was formed in the following manner. The mixture F₁₁ same with that of the process (a) was prepared. This mixture F₁₁ was mixed to carbon powder forming the negative active material with a weight ratio of 2 to 8 under the atmosphere of dried inert gas (mixture H₁₁). The mixture H₁₁ was cast by means of screen coating on the negative current collector plate 5, and was irradiated with electron beam having an electron beam intensity of 15 Mrad under the atmosphere of dried inert gas so as to be cured. A film thickness of the anode composite 4 formed on the negative current collector plate 5 was 30 microns.
(d); The electrolyte layer 3 was formed on the anode composite 4 in the same way as that of process (d) of embodiment 1. A thickness of the electrolyte layer 3 formed on the anode composite 4 was 25 microns.
(e); A laminate of the electrolyte layer 3, the cathode composite 2 and the positive current collector plate 1 prepared by the process (b) and a laminate of the electrolyte layer 3, the anode composite 4 and the negative current collector plate 5 prepared by the process (d) were made contact each other at the respective electrolyte layers 3.

### (Comparison example 2)

A film type battery of this comparison example is different from that of the embodiment 1 in a point that the electrolyte layer 3 has a single-layer structure comprising only of an electrolyte layer formed on the anode composite 4 and is formed by means of ultraviolet irradiation.

The film type battery of this comparison example was made up through the following processes (a) to (c).
(a); The cathode composite 2 and the anode composite 4 were formed in the same ways as those of the processes (a) and (c) of embodiment 1. A film thickness of the cathode composite was 60 microns and that of the anode composite was 30 microns.
(b); The electrolyte layer 3 was formed on the anode composite 4 in the following manner. The mixture C₁ same with that of the embodiment 1 was prepared. 30 weight parts of the mixture C₁ were mixed with 6 weight parts of LiBF₄, 32 weight parts of 1,2-dimethoxyethane, 32 weight parts of γ-butylolactone and 0.03 weight part of benzylmethylketal (mixture H₁₂). This mixture H₁₂ was cast by means of screen coating on the anode composite 4 under the atmosphere of dried inert gas, and irradiated with ultraviolet beam having an intensity of 20 mW/cm² for 60 seconds under the atmosphere of dried inert gas so as to be cured. A thickness of the electrolyte layer 3 formed on the anode composite 4 was 25 microns.
(c); A laminate of the cathode composite 2 and the positive current collector plate 1 prepared by the process (a) and a laminate of the electrolyte layer 3, the anode composite 4 and the negative current collector plate 5 prepared by the process (b) were made contact each other at the respective cathode composite 2 and the electrolyte layer 3.

### (Test)

Charge/discharge cycle tests were done on the batteries of embodiment 1 and comparison examples 1 and 2 to examine respective charge/discharge cycle characteristics at initial stage and after long-term preservation. An electrode surface area could be changed variously depending on manufacturing process, however, it was set to 100 cm² in these tests.

Conditions of charge/discharge cycle tests were as follows. Temperature: 25°C, constant-current constant-voltage charging: 50 µA/cm², constant-current discharging: 50 µA/cm², charge end voltage: 4.1V and discharge end voltage: 2.7V.

Period of long-term preservation was 100 days at 60°C.

Fig. 2 shows the initial charge/discharge cycle characteristic and Fig. 3 shows the charge/discharge cycle characteristic after long-term preservation. In both figures, an axis of abscissa denotes charge/discharge cycle number (times) and an axis of ordinate denotes battery capacity (mAh). It can be understood that the battery of embodiment 1 offers excellent charge/discharge cycle characteristics for both initial stage and after long-term preservation as compared with the batteries of comparison examples 1 and 2.

### (Embodiment 2)

A film type battery of this embodiment is one in which the anode composite 4 of the battery shown in Fig. 1 is made to an anode 4a and the positive current collector plate 1 is made of stainless steel.

In the film type battery of this embodiment, the electrolyte layer 3 has a double-layer structure comprising electrolyte layers formed on the cathode composite 2 and the anode composite 4 respectively and is formed by means of irradiation of electron beam, and only the cathode composite 2 includes the binder.

The film type battery of this embodiment was made up through the following processes (a) to (d).
(a); The cathode composite 2 was formed in the following manner. MnO₂ forming the positive active material was mixed to acetylene black forming the conductive material with a weight ratio of 85 to 15 (mixture A₂). This mixture A₂ was mixed to xylene solution (2 wt%) of nitrile-butadiene rubber forming the binder with a weight ratio of 2.2 to 2 under the atmosphere of dried inert gas (mixture B₂). The mixture B₂ was cast by means of screen coating on the positive current collector plate 1 on a surface of which a conductive carbon film was formed, and dried under the atmosphere of dried inert gas. A film thickness of the cathode composite 2 formed on the positive current collector plate 1 was 60 microns.
(b); The electrolyte layer 3 was formed on the cathode composite 2 in the following manner. The mixture C₁ same with that of the embodiment 1 was prepared. 30 weight parts of the mixture C₁ were mixed with 6 weight parts of LiClO₄ and 64 weight parts of propylenecarbonate (mixture D₂). The mixture D₂ was cast by means of screen coating on the cathode composite 2 and irradiated with electron beam having an electron beam intensity of 8 Mrad under the atmosphere of dried inert gas so as to be cured. A thickness of the electrolyte layer 3 formed on the cathode composite 2 was 15 microns.
(c); The anode 4a was composed of lithium metal forming the negative active material and formed by being press bonded to the negative current collector plate 5.
(d); The electrolyte layer 3 was formed on the anode 4a in the following manner. The mixture D₂ same with that of the process (b) was prepared. The mixture D₂ was cast by means of screen coating on the anode 4a and irradiated with electron beam having an electron beam intensity of 8 Mrad under the atmosphere of dried inert gas so as to be cured. A thickness of the electrolyte layer 3 formed on the anode 4a was 15 microns.
(e); A laminate of the electrolyte layer 3, the cathode composite 2 and the positive current collector plate 1 prepared by the process (b) and a laminate of the electrolyte layer 3, the anode 4a and the negative current collector plate 5 prepared by the process (d) were made contact each other at the respective electrolyte layers 3.

In the processes (b) and (d), the mixture C₁ is polymerized by means of the irradiation of electron beam to form the ion-conductive high-molecular compound having the crosslink network structure. LiClO₄ forming the ionic compound is included in the prepared ion-conductive high-molecular compound under a state of being preferably dissolved by propylenecarbonate.

### (Comparison example 3)

A film type battery of this comparison example is different from that of the embodiment 2 in a point that the cathode composite 2 does not include the binder and the electrolyte layer 3 has a single-layer structure comprising only the electrolyte layer formed on the anode 4a.

The film type battery of this comparison example was made up through the following processes (a) to (d).
(a); The cathode composite 2 was formed in the following manner. The mixture C₁ same with that of the embodiment 1 was prepared. 10 weight parts of the mixture C₁ were mixed with 1 weight part of LiClO₄ and 20 weight parts of propylenecarbonate (mixture F₁₃). While, the mixture A₂ same with that of the embodiment 2 was prepared. This mixture A₂ was mixed to the mixture F₁₃ with a weight ratio of 10 to 3 under the atmosphere of dried inert gas (mixture G₁₃). The mixture G₁₃ was cast by means of screen coating on the positive current collector plate 1 on the surface of which the conductive carbon film was formed. Thereafter, the mixture was irradiated with electron beam having an electron beam intensity of 10 Mrad under the atmosphere of dried inert gas so as to be cured. A film thickness of the cathode composite 2 formed on the positive current collector plate 1 was 60 microns.
(b); The anode 4a was formed in the same way as the process(c) of embodiment 2.
(c); The electrolyte layer 3 was formed on the anode 4a in the following manner. The mixture D₂ same with that of the embodiment 2 was prepared. The mixture D₂ was cast by means of screen coating on the anode 4a and irradiated with electron beam having an electron beam intensity of 8 Mrad under the atmosphere of dried inert gas so as to be cured. A thickness of the electrolyte layer 3 formed on the anode 4a was 30 microns.
(d); A laminate of the cathode composite 2 and the positive current collector plate 1 prepared by the process (a) and a laminate of the electrolyte layer 3, the anode 4a and the negative current collector plate 5 prepared by the process (c) were made contact each other at the respective electrolyte layers 3.

### (Comparison example 4)

A film type battery of this comparison example is different from that of the embodiment 2 in a point that the electrolyte layer 3 has a double-layer structure but is formed by means of ultraviolet irradiation.

The film type battery of this comparison example is made up through the following processes (a) to (d).
(a); The cathode composite 2 was formed in the same way as that of the process (a) of embodiment 2.
(b); The electrolyte layer 3 was formed on the cathode composite 2 in the following manner. The mixture C₁ same with that of the embodiment 1 was prepared. 30 weight parts of the mixture C₁ were mixed with 6 weight parts of LiClO₄, 64 weight parts of propylenecarbonate and 0.03 weight part of benzylmethylketal (mixture H₁₄). This mixture H₁₄ was cast by means of screen coating on the cathode composite 2, and irradiated with ultraviolet beam having an intensity of 20 mW/cm² for 60 seconds under the atmosphere of dried inert gas so as to be cured. A thickness of the electrolyte layer 3 formed on the cathode composite 2 was 15 microns.
(c); The anode 4a was formed in the same way as that of the process (c) of embodiment 2.
(d); The electrolyte layer 3 was formed on the anode 4a in the following manner. The mixture H₁₄ same with that of the process (b) was prepared. This mixture H₁₄ was cast by means of screen coating on the anode 4a, and irradiated with ultraviolet beam having an intensity of 20 mW/cm² for 60 seconds under the atmosphere of dried inert gas so as to be cured. A thickness of the electrolyte layer 3 formed on the anode 4a was 15 microns.
(e); A laminate of the electrolyte layer 3, the cathode composite 2 and the positive current collector plate 1 prepared by the process (b) and a laminate of the electrolyte layer 3, the anode 4a and the negative current collector plate 5 prepared by the process (d) were made contact each other at the respective electrolyte layers 3.

### (Test)

Discharge tests were done on the batteries of embodiment 2 and comparison examples 3 and 4 to examine respective discharge characteristics at initial stage and after long-term preservation. An electrode surface area could be changed variously depending on manufacturing process, however, it was set to 100 cm² in these tests.

Conditions of discharge tests were as follows. Temperature: 25°C, and load: 3 kΩ. Period of long-term preservation was 100 days at 60°C.

Fig. 4 shows an initial discharge characteristic and Fig. 5 shows a discharge characteristic after long-term preservation. In both figures, an axis of abscissa denotes discharge hour (h) and an axis of ordinate denotes discharge voltage (V). It can be understood that the battery of embodiment 2 offers excellent discharge characteristics as compared with the batteries of comparison examples 3 and 4.

### (Embodiment 3)

A fundamental structure of a film type battery of this embodiment is same with that of the embodiment 2.

In the film type battery of this embodiment, the electrolyte layer 3 has a double-layer structure comprising electrolyte layers formed on the cathode composite 2 and the anode composite 4 respectively and is formed by means of irradiation of electron beam, and only the cathode composite 2 includes the binder.

The film type battery of this embodiment was made up through the following processes (a) to (d).
(a); The cathode composite 2 was formed in the following manner. V₂O₅ forming the positive active material was mixed to acetylene black forming the conductive material with a weight ratio of 85 to 15 (mixture A₃). This mixture A₃ was mixed to dimethylformamide solution (2 wt%) of polyacrylonitrile forming the binder with a weight ratio of 2.3 to 2 under the atmosphere of dried inert gas (mixture B₃). The mixture B₃ was cast by means of screen coating on the positive current collector plate 1 on a surface of which a conductive carbon film was formed, and dried under the atmosphere of dried inert gas. A film thickness of the cathode composite 2 formed on the positive current collector plate 1 was 60 microns.
(b); The electrolyte layer 3 was formed on the cathode composite 2 in the following manner. The mixture C₁ same with that of the embodiment 1 was prepared. 30 weight parts of the mixture C₁ were mixed with 6 weight parts of LiAsF₆, 32 weight parts of ethylenecarbonate and 32 weight parts of 2-methyltetrahydrofuran (mixture D₃). The mixture D₃ was cast by means of screen coating on the cathode composite 2 and irradiated with electron beam having an electron beam intensity of 8 Mrad under the atmosphere of dried inert gas so as to be cured. A thickness of the electrolyte layer 3 formed on the cathode composite 2 was 20 microns.
(c); The anode 4a was formed in the same way as that of the process (c) of embodiment 2.
(d); The electrolyte layer 3 was formed on the anode 4a in the following manner. The mixture D₃ same with that of the process (b) was prepared. The mixture D₃ was cast by means of screen coating on the anode 4a and irradiated with electron beam having an electron beam intensity of 8 Mrad under the atmosphere of dried inert gas so as to be cured. A thickness of the electrolyte layer 3 formed on the anode 4a was 20 microns.
(e); A laminate of the electrolyte layer 3, the cathode composite 2 and the positive current collector plate 1 prepared by the process (b) and a laminate of the electrolyte layer 3, the anode 4a and the negative current collector plate 5 prepared by the process (d) were made contact each other at the respective electrolyte layers 3.

In the processes (b) and (d), the mixture C₁ is polymerized by means of the irradiation of electron beam to form the ion-conductive high-molecular compound having the crosslink network structure. LiAsF₆ forming the ionic compound is included in the prepared ion-conductive high-molecular compound under a state of being preferably dissolved by ethylenecarbonate and 2-methyltetrahydrofulan.

### (Comparison example 5)

A film type battery of this comparison example is different from that of the embodiment 3 in a point that the cathode composite 2 does not include the binder and the electrolyte layer 3 has a single-layer structure comprising only the electrolyte layer formed on the anode 4a.

The film type battery of this comparison example was made up through the following processes (a) to (d).
(a); The cathode composite 2 was formed in the following manner. The mixture C₁ same with that of the embodiment 1 was prepared. 10 weight parts of the mixture C₁ were mixed with 1 weight part of LiAsF₆, 10 weight parts of ethylenecarbonate and 10 weight parts of 2-methyltetrahydrofulan (mixture F₁₅). While, the mixture A₃ same with that of the embodiment 3 was prepared. This mixture A₃ was mixed to the mixture F₁₅ with a weight ratio of 10 to 3 under the atmosphere of dried inert gas (mixture G₁₅). The mixture G₁₅ was cast by means of screen coating on the positive current collector plate 1 on the surface of which the conductive carbon film was formed. Thereafter, the mixture was irradiated with electron beam having an electron beam intensity of 10 Mrad under the atmosphere of dried inert gas so as to be cured. A film thickness of the cathode composite 2 formed on the positive current collector plate 1 was 60 microns.
(b); The anode 4a was formed in the same way as that of the process (c) of embodiment 2.
(c); The electrolyte layer 3 was formed on the anode 4a in the following manner. The mixture D₃ same with that of the embodiment 3 was prepared. The mixture D₃ was cast by means of screen coating on the anode 4a and irradiated with electron beam having an electron beam intensity of 8 Mrad under the atmosphere of dried inert gas so as to be cured. A thickness of the electrolyte layer 3 formed on the anode 4a was 20 microns.
(d); A laminate of the cathode composite 2 and the positive current collector plate 1 prepared by the process (a) and a laminate of the electrolyte layer 3, the anode 4a and the negative current collector plate 5 prepared by the process (c) were made contact each other at the cathode composite 2 and the electrolyte layer 3.

### (Comparison example 6)

A film type battery of this comparison example is different from that of the embodiment 3 in a point that the electrolyte layer 3 has a double-layer structure but is formed by means of ultraviolet irradiation.

The film type battery of this comparison example is made up through the following processes (a) to (d).
(a); The cathode composite 2 was formed in the same way as that of the process (a) of embodiment 3.
(b); The electrolyte layer 3 was formed on the cathode composite 2 in the following manner. The mixture C₁ same with that of the embodiment 1 was prepared. 30 weight parts of the mixture C₁ were mixed with 6 weight parts of LiAsF₆, 32 weight parts of ethylenecarbonate, 32 weight parts of 2-methyltetrahydrofulan and 0.03 weight part of benzylmethylketal (mixture H₁₆). This mixture H₁₆ was cast by means of screen coating on the cathode composite 2, and irradiated with ultraviolet beam having an intensity of 20 mW/cm² for 60 seconds under the atmosphere of dried inert gas so as to be cured. A thickness of the electrolyte layer 3 formed on the cathode composite 2 was 20 microns.
(c); The anode 4a was formed in the same way as that of the processe (c) of embodiment 2.
(d); The electrolyte layer 3 was formed on the anode 4a in the following manner. The mixture H₁₆ same with that of the process (b) was prepared. This mixture H₁₆ was cast by means of screen coating on the anode 4a, and irradiated with ultraviolet beam having an intensity of 20 mW/cm² for 60 seconds under the atmosphere of dried inert gas so as to be cured. A thickness of the electrolyte layer 3 formed on the anode 4a was 20 microns.
(e); A laminate of the electrolyte layer 3, the cathode composite 2 and the positive current collector plate 1 prepared by the process (b) and a laminate of the electrolyte layer 3, the anode 4a and the negative current collector plate 5 prepared by the process (d) were made contact each other at the respective electrolyte layers 3.

### (Test)

Charge/discharge cycle tests were done on the batteries of embodiment 3 and comparison examples 5 and 6 to examine respective charge/discharge cycle characteristics at initial stage and after long-term preservation. An electrode surface area could be changed variously depending on manufacturing process, however, it was set to 100 cm² in these tests.

Conditions of charge/discharge cycle tests were as follows. Temperature: 25°C, constant-current constant-voltage charging: 50 µA/cm², constant-current discharge: 50 µA/cm², charge end voltage: 3.2V, and discharge end voltage: 2.0V.

Period of long-term preservation was 100 days at 60°C.

Fig. 6 shows the initial charge/discharge cycle characteristic and Fig. 7 shows the charge/discharge cycle characteristic after long-term preservation. In both figures, an axis of abscissa denotes charge/discharge cycle number (times) and an axis of ordinate denotes battery capacity (mAh). It can be understood that the battery of embodiment 3 offers excellent charge/discharge cycle characteristics for both the initial stage and after long-term preservation as compared with the batteries of comparison examples 5 and 6.

## Claims

1. A battery in which electrolyte layers formed on a cathode and an anode respectively are made contact each other at layer surfaces, at least one of the cathode and the anode includes a binder, and the electrolyte layers are composed of an ion-conductive high-molecular compound including one or more kinds of ionic compound in a solution state.

2. A battery as set forth in claim 1, in which the ion-conductive high-molecular compound is formed by means of polymerization reaction created by irradiation of ionizing radiation.

3. A battery as set forth in claim 1, in which the ion-conductive high-molecular compound is formed by polymerizing a high molecular compound having a reactive double bond and a polyether structure so that it has a crosslink network structure.

4. A battery as set forth in claim 1, in which the ion-conductive high-molecular compound includes an organic compound which can dissolve an ionic compound.
